# EUROPEAN PATENT APPLICATION

(11) **EP 3 852 435 A1**
(43) Date of publication of application: **21.07.2021**
(21) Application number: 18935306.3
(22) Date of filing: 29.09.2018
(51) Int. Cl.: H04W 28/12

(54) **SIGNALING PROCESSING METHOD, DEVICE, AND STORAGE MEDIUM**

(71) Applicant: GUANGDONG OPPO MOBILE TELECOMMUNICATIONS CORP., LTD., Dongguan Guangdong 523860 (CN)
(72) Inventor: YANG, Ning, Dongguan, Guangdong 523860 (CN); LIU, Jianhua, Dongguan, Guangdong 523860 (CN); SHI, Cong, Dongguan, Guangdong 523860 (CN)
(74) Representative: Penza, Giancarlo
(86) International application number: PCT/CN2018/108628
(87) International publication number: WO 2020/062141

(57) **Abstract**

Disclosed in the present invention is a signaling processing method, comprising: a terminal device segments signaling into at least two pieces of segmented signaling, the segmented signaling being part of the signaling; and the terminal device sends the at least two pieces of segmented signaling to a network device. Also disclosed in the present invention are another signaling processing method, a terminal device, a network device, and a storage medium.

## Description

### Technical Field

The present invention relates to the field of wireless communication technology, in particular to a method for signaling processing, a device and a storage medium.

### Background

In a New Radio (NR) Rel-15 system, the maximum size of a Service Data Unit (SDU) supported in the Packet Data Convergence Protocol (PDCP) layer is 9K Bytes. Therefore, when the size of a signaling sent from a Radio Resource Control (RRC) layer to the PDCP layer exceeds the maximum size of an SDU supported by the PDCP layer, thereby the signaling cannot be transmitted effectively.

### Summary

In order to solve the above technical problem, an embodiment of the present invention provides a method for signaling processing, a device and a storage medium, by which a signaling can be transmitted effectively when the signaling sent from an RRC layer to a PDCP layer exceeds the maximum size of an SDU supported in the PDCP layer.

In a first aspect, an embodiment of the present invention provides a method for signaling processing, including: segmenting, by a terminal device, a signaling into at least two segmented signalings, wherein the segmented signaling is a partial signaling of the signaling; and sending, by the terminal device, the at least two segmented signalings to a network device.

In a second aspect, an embodiment of the present invention provides a method for signaling processing, including: receiving, by a network device, at least two segmented signalings sent by a terminal device, wherein the segmented signaling is a partial signaling obtained by segmenting a signaling.

In a third aspect, an embodiment of the present invention provides a terminal device, including: a processing unit, configured to segment a signaling into at least two segmented signalings, wherein the segmented signaling is a partial signaling of the signaling; and a first sending unit, configured to send the at least two segmented signalings to a network device.

In a fourth aspect, an embodiment of the present invention provides a network device, including: a second receiving unit, configured to receive at least two segmented signalings sent by a terminal device, wherein the segmented signaling is a partial signaling obtained by segmenting a signaling.

In a fifth aspect, an embodiment of the present invention provides a terminal device, including: a processor and a memory configured to store a computer program capable of being run on the processor, wherein the processor is configured to execute acts of the above method for signaling processing performed by a terminal device when the computer program is run.

In a sixth aspect, an embodiment of the present invention provides a network device, including: a processor and a memory configured to store a computer program capable of being run on the processor, wherein the processor is configured to execute acts of the above method for signaling processing performed by a network device when the computer program is run.

In a seventh aspect, an embodiment of the present invention provides a storage medium, storing an executable program, wherein, when the executable program is executed by a processor, the above method performed by a terminal device is implemented.

In an eighth aspect, an embodiment of the present invention provides a storage medium, storing an executable program, wherein, when the executable program is executed by a processor, the above method performed by a network device is implemented.

According to the method for signaling processing provided by an embodiment of the present invention, a terminal device segments a signaling, which is sent to a network device, into segmented signalings, so that when a signaling sent by the terminal device exceeds the maximum size of an SDU supported in a certain protocol layer, the signaling can be effectively transmitted.

### Brief Description of Drawings

FIG. 1 is a schematic diagram of a relationship between capability information of a terminal device and a size of a PDCP SDU according to an embodiment of the present invention.
FIG. 2 is a schematic diagram of composition and structure of a communication system according to an embodiment of the present invention.
FIG. 3 is a schematic diagram of an optional processing flow of a method for signaling processing applied to a terminal device according to an embodiment of the present invention.
FIG. 4 is a schematic diagram of different segmented signalings containing same capability information according to an embodiment of the present invention.
FIG. 5 is a schematic diagram of an optional processing flow of a method for signaling processing applied to a network device according to an embodiment of the present invention.
FIG. 6 is a schematic diagram of composition and structure of a terminal device according to an embodiment of the present invention.
FIG. 7 is a schematic diagram of composition and structure of a network device according to an embodiment of the present invention.
FIG. 8 is a schematic diagram of composition and structure of hardware of an electronic device according to an embodiment of the present invention.

### Detailed Description

To understand features and technical contents of embodiments of the present invention in more detail, realizations of the embodiments of the present invention will be described in detail below with reference to accompanying drawings, and the accompanying drawings are used for reference and explanation only, and are not used for limiting the embodiments of the present invention.

Before the embodiments of the present invention are described in detail, a signaling sent by a terminal device to a network device is described briefly first.

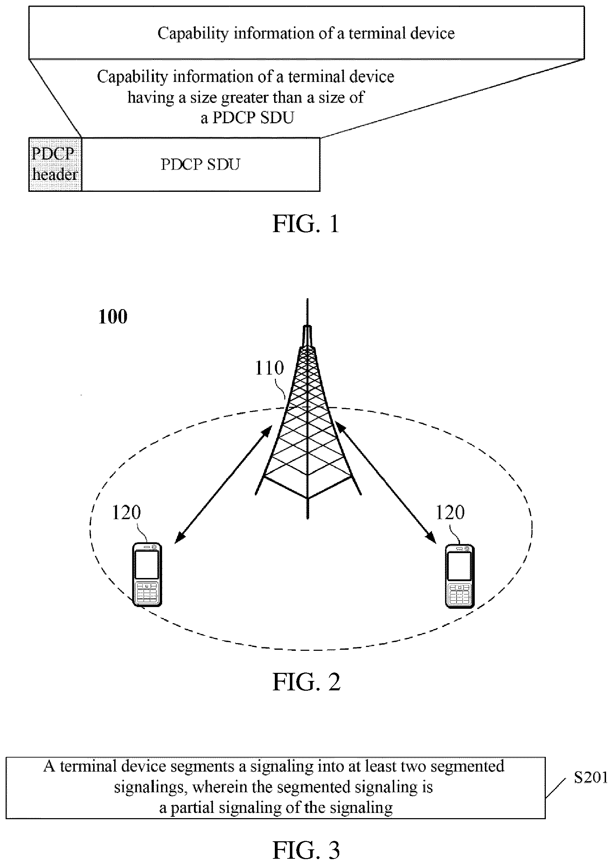

In an LTE system and an NR system, a terminal device reports capability information of the terminal device to a network device by means of signaling. In addition, with network standards, frequency bands, and functions, etc. supported by a terminal device becoming more and more abundant, a size of capability information of the terminal device gradually increases, and the capability information of the terminal device also becomes more and more complex. In the related art, a size of a single SDU that a PDCP layer can bear is 9K Bytes. Therefore, a schematic diagram of a relationship between a size of capability information of a terminal device and a size of a PDCP SDU, as shown in FIG. 1, will occur. FIG. 1 shows that the size of the capability information of the terminal device is larger than the size of the PDCP SDU. At this time, the size of the capability information of the terminal device will be unable to be contained in the PDCP SDU, and the terminal device cannot report the capability information of the terminal device to a network device.

In order to solve the above problem, an embodiment of the present invention proposes to increase the size of the PDCP SDU, which, however, will lead to an increase in a storage space of the terminal device, thereby increasing cost of the terminal device. An embodiment of the present invention also proposes that when requesting the terminal device for the capability information of the terminal device, the network device only requests information of interest of the network device, such as a frequency band, a maximum supported quantity of downlink carrier units, maximum supported data of uplink carrier units, or the like, so as to reduce the size of the capability information of the terminal device reported by the terminal device. However, with introduction of more functions and more frequency bands of the terminal device, it is caused that the size of the capability information of the terminal device may also exceed limitation of a PDCP SUD.

In view of the above problem, the present invention provides a method for signaling processing. The method for signaling processing according to an embodiment of the present application may be applied to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, LTE Time Division Duplex (TDD), a Universal Mobile Telecommunication System (UMTS), a Worldwide Interoperability for Microwave Access (WiMAX) communication system, or a 5G system, etc.

Illustratively, a communication system 100 applied in an embodiment of the present application is as shown in FIG. 2. The communication system 100 may include a network device 110, and the network device 110 may be a device that communicates with a terminal device 120 (or referred to as a communication terminal, or a terminal). The network device 110 may provide communication coverage for a specific geographical area, and may communicate with terminal devices located within the coverage area. Optionally, the network device 110 may be a Base Transceiver Station (BTS) in a GSM system or a CDMA system, a NodeB (NB) in a WCDMA system, an Evolutional Node B (eNB or eNodeB) in an LTE system, or a radio controller in a Cloud Radio Access Network (CRAN), or the network device may be a network side device in a mobile switch center, a relay station, an access point, a vehicle-mounted device, a wearable device, a hub, a switch, a bridge, a router, or a 5G network, or a network device in a future evolved Public Land Mobile Network (PLMN), etc.

The communication system 100 also includes at least one terminal device 120 located within the coverage area of the network device 110. As used herein, the term "terminal device" includes, but is not limited to, a device configured to connect via a wired line, for example, via Public Switched Telephone Networks (PSTN), a Digital Subscriber Line (DSL), a digital cable, a direct cable; and/or another data connection/network; and/or via a wireless interface, for instance, for a cellular network, a Wireless Local Area Network (WLAN), a digital television network such as a DVB-H network, a satellite network, and an AM-FM broadcast sender; and/or an apparatus, of another terminal device, configured to receive/send a communication signal; and/or an Internet of Things (IoT) device. A terminal device configured to communicate via a wireless interface may be referred to as a "wireless communication terminal", a "wireless terminal" or a "mobile terminal". Examples of the mobile terminal include, but not limited to, a satellite or cellular telephone, a Personal Communications System (PCS) terminal which may combine a cellular radio telephone and data processing, faxing, and data communication abilities, a PDA that may include a radio telephone, a pager, an internet/intranet access, a Web browser, a memo pad, a calendar, and/or a Global Positioning System (GPS) receiver, and a conventional laptop and/or palmtop receiver or another electronic apparatus including a radio telephone transceiver. The terminal device may be referred to as an access terminal, a User Equipment (UE), a subscriber unit, a subscriber station, a mobile station, a mobile platform, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a Wireless Local Loop (WLL) station, a Personal Digital Assistant (PDA), a handheld device with a wireless communication function, a computing device, or another processing device connected to a wireless modem, a vehicle-mounted device, a wearable device, a terminal device in a 5G network, or a terminal device in a future evolved PLMN, or the like.

Optionally, terminal direct connection (Device to Device, D2D) communication may be performed between the terminal devices 120.

Optionally, the 5G system or the 5G network may also be referred to as a New Radio (NR) system or an NR network.

FIG. 2 shows one network device and two terminal devices as an example. Optionally, the communication system 100 may include multiple network devices, and another quantity of terminal devices may be included within the coverage area of each network device, and this is not limited in the embodiments of the present application.

Optionally, the communication system 100 may further include another network entity such as a network controller, a mobile management entity, etc., which is not limited in the embodiments of the present application.

It should be understood that a device with a communication function in a network/system may be referred to as a communication device in the embodiments of the present application. Taking the communication system 100 shown in FIG. 2 as an example, the communication device may include a network device 110 and a terminal device 120 which have the communication function, and the network device 110 and the terminal device 120 may be the specific devices described above, which will not be repeated here again. The communication devices may also include another device in the communication system 100, e.g., another network entity such as a network controller, a mobile management entity, etc., which is not limited in the embodiments of the present application.

As shown in FIG. 3, an optional processing flow of a method for signaling processing applied to a terminal device according to an embodiment of the present invention includes a following act S201.

In act S201, the terminal device segments a signaling into at least two segmented signalings, wherein the segmented signaling is a partial signaling of the signaling.

In some embodiments, when the size of the signaling is larger than a first threshold, the terminal device segments the signaling into at least two segmented signalings; and when the size of the signaling is an integer multiple of the first threshold, a size of each of the at least two segmented signalings is equal to the first threshold. When the size of the signaling is not an integer multiple of the first threshold, a size of a first segmented signaling of the at least two segmented signalings is smaller than the first threshold, and a size of any segmented signaling of the at least two segmented signalings other than the first segmented signaling is equal to the first threshold; or the signaling is evenly segmented according to the size of the signaling, wherein a size of each segmented signaling after segmenting is equal, and the size of each segmented signaling is smaller than or equal to the first threshold. Alternatively, when the size of the signaling is not an integer multiple of the first threshold, the signaling is equally segmented, that is, a size of each segmented signaling after the signaling segmenting is equal, and the size of each segmented signaling is smaller than the first threshold.

Of course, another segmenting mode, in which the size of each segmented signaling may be smaller than the first threshold, may also be included. For example, the size of the first segmented signaling is equal to the first threshold, and the sizes of other segmented signalings after the first segmented signaling progressively decrease by a specific value. For example, the size of the first segmented signaling is the first threshold, the size of the second segmented signaling is the first threshold minus a second threshold, and the size of the third segmented signaling is the size of the second segmented signaling minus the second threshold. The size of the second threshold may be set flexibly according to an actual application scenario.

In some embodiments, the first threshold is a maximum value of a data size that a PDCP layer can support, e.g., 9K Bytes. At this time, the signaling is segmented at an RRC layer.

In an embodiment of the present invention, the terminal device first receives a request message which is sent by the network device through an RRC signaling, requesting the terminal device to send a signaling to the network device, wherein the signaling carries capability information of the terminal device, etc. The request message sent by the network device and received by the terminal device carries an RRC signaling identity (ID). When a terminal sends a signaling to the network device based on the request message, the signaling also carries the RRC ID, which is used for indicating that the signaling is directed to the request message corresponding to the RRC ID. For example, when the identity of the RRC signaling of the request message sent by the network device is 1, the identity of the RRC signaling that the terminal device sends to the network device based on the request message is also 1.

In some embodiments, the terminal device indicates a position of the segmented signaling in the signaling. In a specific implementation, the terminal device sets a corresponding identity for each segmented signaling. When that of a request message corresponding to the segmented signaling is 1, identities of four segmented signalings are set as la, 1b, 1c and 10, respectively; wherein, a first character in the identity of the segmented signaling is used for indicating the RRC signaling corresponding to the segmented signaling, and the first character is the same as the identity of the RRC signaling of the request message sent by the network device; and a second character in the identity of the segmented signaling is used for indicating a position of the segmented signaling in all segmented signalings, wherein a represents the first segmented signaling, b represents the second segmented signaling, c represents the third segmented signaling, and 0 represents the last segmented signaling. Here, the first character in the identity of the segmented signaling may also be referred to as a transaction identity, and the second character in the identity of the segmented signaling may also be referred to as a sub-identity. In some other embodiments, it may also be set that the identity of the segmented signaling is the same as the identity of the RRC signaling. For example, the identity of the RRC signaling is 1, the identity of the last segmented signaling is 0, and the identities of other segmented signalings except the last segmented signaling are all 1.

Examples are given above for the identity of the segmented signaling. In a specific implementation, many kinds of identities of the segmented signalings may be included, as long as the RRC signaling sent by the network device corresponding to the segmented signaling and the position of the segmented signaling in the signaling can be indicated. Therefore, the presentation mode of the identity of the segmented signaling is not limited to the forms listed in the above embodiment. For example, a specific character may also be used for indicating that the segmented signaling is the last part of the signaling. The specific character is, for example, all characters being 0 or all characters being 1.

In some other embodiments, the terminal device indicates a processing relationship between the segmented signaling and a segmented signaling that has already been sent to the network device. The processing relationship is used for processing the segmented signaling by the network device. The processing relationship includes: the segmented signaling being combined with the segmented signaling that has already been sent to the network device, and the segmented signaling replacing the segmented signaling that has already been sent to the network device. Herein, when the segmented signaling is combined with the segmented signaling that has already been sent to the network device, the network device stores information in the segmented signaling to the network device; and when the segmented signaling replaces the segmented signaling that has already been sent to the network device, the network device replaces the segmented signaling stored therein with the segmented signaling. In a specific implementation, if the terminal device does not indicate the processing relationship between the segmented signaling and the segmented signaling that has already been sent to the network device, the network device stores information in the segmented signaling to the network device.

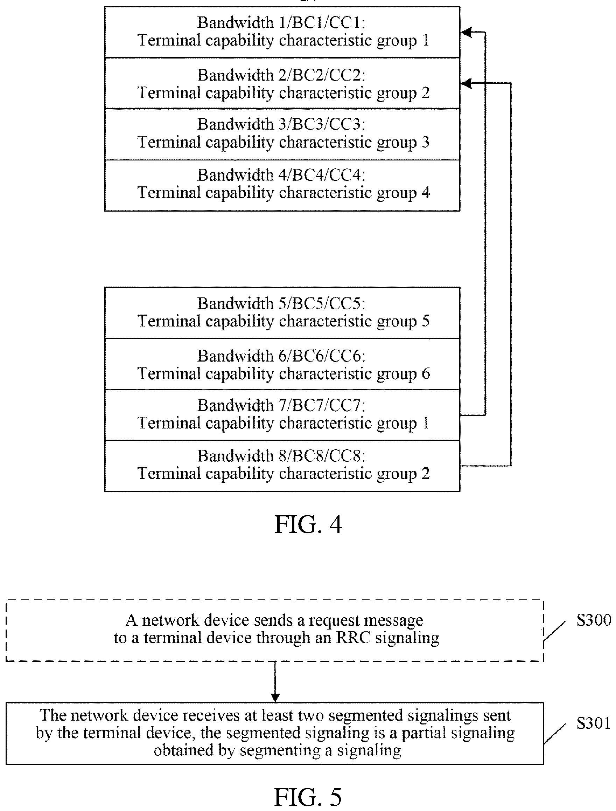

In yet some embodiments, the terminal device sends segmented signalings to the network device, and the network device stores received a third segmented signaling. When the terminal device further sends a second segmented signaling and confirms that the second segmented signaling to be sent has the same information as the third segmented signaling that has already been sent, the terminal device no longer sends this part of the same information to the network device, but needs to indicate that this part of the same information is within the third segmented signaling and indicate a position corresponding to the same information within the third segmented signaling. In a specific implementation, indication may be performed by carrying the identity of the third segmented signaling. Taking the segmented signaling carrying capability information of the terminal device as an example, and a schematic diagram of different segmented signalings containing the same capability information, as shown in FIG. 4, the third segmented signaling includes a terminal capability characteristic group 1, a terminal capability characteristic group 2, a terminal capability characteristic group 3 and a terminal capability characteristic group 4, and the network device receives and stores the third segmented signaling sent by the terminal device; when the terminal device is going to send the second segmented signaling to the network device, it confirms that the terminal capability characteristic group 1 and the terminal capability characteristic group 2 in the second segmented signaling have already been sent to the network device through the third segmented signaling, at this time the terminal device does not report the terminal capability characteristic group 1 and the terminal capability characteristic group 2 to the network device; however, the terminal device indicates in the second segmented signaling that the terminal capability characteristic group 1 and the terminal capability characteristic group 2 are within the third segmented signaling, and positions of the terminal capability characteristic group 1 and the terminal capability characteristic group 2 in the third segmented signaling. At this time, the terminal device does not need to report the terminal capability characteristic group 1 and the terminal capability characteristic group 2, which saves overhead of reporting the capability information of the terminal device. Here, the second segmented signaling and the third segmented signaling are segmented signalings after the signaling switch.

As shown in FIG. 5, an optional processing flow of a method for signaling processing applied to a network device according to an embodiment of the present invention includes a following act S301.

In act S301, the network device receives at least two segmented signalings sent by a terminal device, wherein the segmented signaling is a partial signaling obtained by segmenting a signaling.

In some embodiments, when a size of the signaling is larger than a first threshold, the terminal device segments the signaling into at least two segmented signalings; and when the size of the signaling is an integer multiple of the first threshold, a size of each of the at least two segmented signalings is equal to the first threshold. When the size of the signaling is not an integer multiple of the first threshold, the size of a first segmented signaling of the at least two segmented signalings is smaller than the first threshold, and the size of any segmented signaling of the at least two segmented signalings other than the first segmented signaling is equal to the first threshold. Alternatively, the signaling is evenly segmented according to the size of the signaling, a size of each segmented signaling after segmenting is equal, and the size of each segmented signaling is smaller than or equal to the first threshold. Alternatively, when the size of the signaling is not an integer multiple of the first threshold, the signaling is equally segmented, that is, a size of each segmented signaling after signaling segmenting is equal, and the size of each segmented signaling is smaller than the first threshold. Of course, another segmenting mode that can cause a size of each segmented signaling to be smaller than the first threshold may also be included. For example, the size of the first segmented signaling is equal to the first threshold, and the sizes of other segmented signalings after the first segmented signaling progressively decrease by a specific value. For example, the size of the first segmented signaling is the first threshold, the size of the second segmented signaling is the first threshold minus a second threshold, and the size of the third segmented signaling is the size of the second segmented signaling minus the second threshold. Optionally, the first threshold is a maximum value of transmitted data supported by the PDCP layer, and the size of the second threshold may be set flexibly according to an actual application scenario.

Before act S301 is performed, the method further includes act S300.

In act S300, the network device sends a request message to the terminal device through an RRC signaling.

In an embodiment of the present invention, the request message is used for requesting the terminal device to send the signaling to the network device, and the request message carries a transaction identity of the RRC signaling.

Accordingly, the network device receives a transaction identity of the segmented signaling corresponding to an RRC signaling sent by the terminal device and an indication of a position of the segmented signaling in the signaling.

Specifically, description for the transaction identity of the segmented signaling corresponding to the RRC signaling sent by the terminal device and the indication of the position of the segmented signaling in the signaling is the same as that in act S201 of the above embodiment, which will not be repeated here again.

In some embodiments, the network device receives an indication of a processing relationship between the segmented signaling and the segmented signaling that has already been stored by the network device, wherein the processing relationship is used for processing the segmented signaling by the network device. The processing relationship includes: the segmented signaling being combined with the segmented signaling that has already been stored by the network device, and the segmented signaling replacing the segmented signaling that has already been stored by the network device. Herein, when the segmented signaling is combined with the segmented signaling that has already been stored by the network device, the network device stores information in the segmented signaling to the network device; and when the segmented signaling replaces the segmented signaling that has already been stored by the network device, the network device replaces the segmented signaling stored therein with the segmented signaling. In a specific implementation, if the terminal device does not indicate the processing relationship between the segmented signaling and the segmented signaling that has already been stored by the network device, the network device stores information in the segmented signaling to the network device.

In some other embodiments, when the second segmented signaling to be sent by the terminal device has the same information as the third segmented signaling that has already been sent by the terminal device, the network device receives an indication which is sent by the terminal device and which indicates that the same information is within the third segmented signaling, and indicates a specific position of the same information in the third segmented signaling. Here, the at least two segmented signalings include: the second segmented signaling and the third segmented signaling. Here, the second segmented signaling and the third segmented signaling are segmented signalings after the signaling switch.

It should be noted that the segmented signaling carries information reported by the terminal device to the network device, e.g., capability information of the terminal device. When the segmented signaling carries the capability information of the terminal device, a processing flow of the method for signaling processing includes acts S401 to S403.

In act S401, the network device sends an RRC signaling to the terminal device, requesting the terminal device to report capability information.

In act S402, the terminal device segments the signaling carrying the capability information into at least two segmented signalings.

In act S403, the terminal device reports the segmented signaling to the network device.

In some embodiments, the terminal device indicates a position of each reported segmented signaling in the signaling, and indicates whether the capability information in the currently reported segmented signaling and the capability information in the already reported segmented signaling are in a combination relationship or a replacement relationship.

In some other embodiments, when capability information in the second segmented signaling to be reported by a terminal is the same as part of capability information in the third segmented signaling already reported, the terminal device does not report the same capability information; however, the terminal device indicates a position of the same capability information in the third segmented signaling.

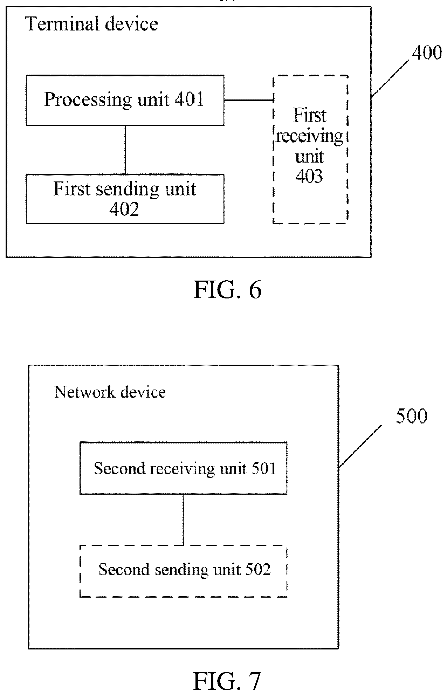

An embodiment of the present invention provides a terminal device. Composition and structure of a terminal device 400, as shown in FIG. 6, includes a processing unit 401 and a first sending unit 402.

The processing unit 401 is configured to segment a signaling into at least two segmented signalings, wherein the segmented signaling is a partial signaling of the signaling.

The first sending unit 402 is configured to send the at least two segmented signalings to a network device.

In an embodiment of the present invention, the processing unit 401 is configured to segment, by the terminal device, signaling into at least two segmented signalings when a size of the signaling is larger than a first threshold; a size of each of the at least two segmented signalings is equal, and the size of each segmented signaling is smaller than or equal to the first threshold; or a size of a first segmented signaling of the at least two segmented signalings is smaller than the first threshold, and a size of any segmented signaling of the at least two segmented signalings other than the first segmented signaling is equal to the first threshold. Herein, the first threshold is a maximum value of transmitted data supported by the Packet Data Convergence Protocol (PDCP) layer.

In an embodiment of the present invention, the terminal device further includes: a first receiving unit 403, configured to receive a request message sent by the network device through an RRC signaling.

The request message is used for requesting the terminal device to send the signaling to the network device, wherein the request message carries a transaction identity of the RRC signaling.

In an embodiment of the present invention, the processing unit 401 is further configured to indicate a transaction identity of the segmented signaling corresponding to an RRC signaling.

In an embodiment of the present invention, the processing unit 401 is further configured to indicate a position of the segmented signaling in the signaling.

In an embodiment of the present invention, the processing unit 401 is configured to indicate, through a preset identity, that the segmented signaling is the last segmented signaling in the signaling.

In an embodiment of the present invention, the processing unit 401 is configured to indicate a processing relationship between the segmented signaling and a segmented signaling that has already been sent to the network device, wherein the processing relationship is used for processing the segmented signaling by the network device. Herein, the processing relationship includes: the segmented signaling being combined with the segmented signaling that has already been sent to the network device, and the segmented signaling replacing the segmented signaling that has already been sent to the network device.

In an embodiment of the present invention, when a second segmented signaling to be sent by the terminal device has the same information as a third segmented signaling that has already been sent by the terminal device, the processing unit 401 is configured to not send the same information, and indicate that the same information is within the third segmented signaling; and the at least two segmented signalings include: the second segmented signaling and the third segmented signaling.

In an embodiment of the present invention, the signaling carries the capability information of the terminal device.

An embodiment of the present invention provides a network device. As shown in FIG. 7, composition and structure of a network device 500 includes a second receiving unit 501.

The second receiving unit 501 is configured to receive at least two segmented signalings sent by a terminal device, wherein the segmented signaling is a partial signaling obtained by segmenting a signaling.

In an embodiment of the present invention, when a size of the signaling is larger than a first threshold, the signaling is segmented into at least two segmented signalings; a size of each of the at least two segmented signalings is equal, and the size of each segmented signaling is smaller than or equal to the first threshold; or a size of a first segmented signaling of the at least two segmented signalings is smaller than the first threshold, and a size of any segmented signaling of the at least two segmented signalings other than the first segmented signaling is equal to the first threshold.

In an embodiment of the present invention, the network device further includes a second sending unit 502.

The second sending unit 502 is configured to send a request message to the terminal device through an RRC signaling.

The request message is used for requesting the terminal device to send the signaling to the network device, wherein the request message carries a transaction identity of the RRC signaling.

In an embodiment of the present invention, the second receiving unit 501 is further configured to receive a transaction identity of the segmented signaling corresponding to an RRC signaling.

In an embodiment of the present invention, the second receiving unit 501 is further configured to receive an indication of a position of the segmented signaling in the signaling.

In an embodiment of the present invention, the second receiving unit 501 is configured to receive a preset identity sent by the terminal device, wherein the preset identity indicates that the segmented signaling is the last segmented signaling in the signaling.

In an embodiment of the present invention, the second receiving unit 501 is further configured to receive an indication of a processing relationship between the segmented signaling and a segmented signaling that has already been stored by the network device, wherein the processing relationship is used for processing the segmented signaling by the network device. Herein, the processing relationship includes: the segmented signaling being combined with the segmented signaling that has already been stored by the network device, and the segmented signaling replacing the segmented signaling that has already been stored by the network device.

In an embodiment of the present invention, when a second segmented signaling to be received by the network device has the same information as a third segmented signaling that has already been stored by the network device, the second receiving unit 501 is further configured to receive an indication that the same information is within the third segmented signaling.

The at least two segmented signalings include: the second segmented signaling and the third segmented signaling.

In an embodiment of the present invention, the signaling carries capability information of the terminal device.

An embodiment of the present invention further provides a terminal device, including a processor and a memory configured to store a computer program capable of being run on the processor, wherein the processor is configured to execute acts of the above power allocating method performed by the terminal device, when the computer program is run.

An embodiment of the present invention further provides a network device, including a processor and a memory configured to store a computer program capable of being run on the processor, wherein the processor is configured to execute acts of the above power allocating method performed by the network device, when the computer program is run.

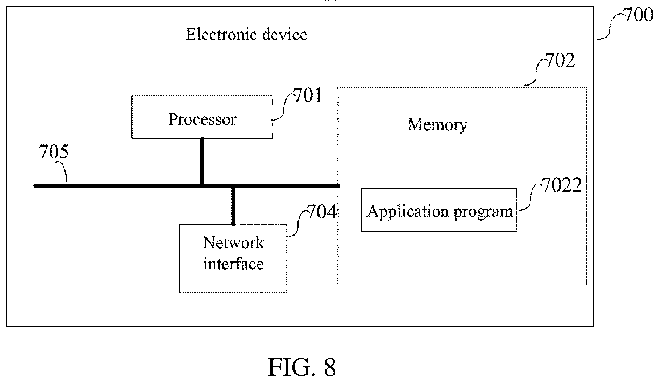

FIG. 8 is a schematic diagram of composition and structure of hardware of an electronic device (a network device or a terminal device) according to an embodiment of the present invention. An electronic device 700 includes: at least one processor 701, a memory 702 and at least one network interface 704. Various components in the electronic device 700 are coupled together by a bus system 705. It may be understood that the bus system 705 is used for implementing connection and communication between these components. In addition to a data bus, the bus system 705 also includes a power bus, a control bus, and a status signal bus. However, for clarity, all kinds of buses are all labeled as the bus system 705 in FIG. 8.

It can be understood that the memory 702 may be a volatile memory or a non-volatile memory, or may include both of a volatile memory and a non-volatile memory. Herein, the non-volatile memory may be an ROM, a Programmable Read-Only Memory (PROM), an Erasable Programmable Read-Only Memory (EPROM), an Electrically Erasable Programmable Read-Only Memory (EEPROM), a ferromagnetic random access memory (FRAM), a Flash Memory, a magnetic surface memory, a compact disk, or a Compact Disc Read-Only Memory (CD-ROM). The magnetic surface memory may be a magnetic disk memory or a magnetic tape memory. The volatile memory may be a Random Access Memory (RAM) which serves as an external cache. By way of exemplary but not restrictive illustrations, many forms of RAMs are available, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), and a Direct Rambus Random Access Memory (DRRAM). The memory 702 described in an embodiment of the present invention is intended to include, but is not limited to, these and any other suitable types of memories.

The memory 702 in an embodiment of the present invention is configured to store various types of data to support an operation of the electronic device 700. Examples of such data include any computer program for being operated on the electronic device 700, such as an application program 7022. A program for implementing a method according to an embodiment of the present invention may be contained in the application program 7022.

Methods disclosed in the above embodiments of the present invention may be applied in the processor 701 or implemented by the processor 701. The processor 701 may be an integrated circuit chip with a signal processing capability. In an implementation process, the acts of the methods described above may be accomplished by an integrated logic circuit of hardware in the processor 701 or instructions in a form of software. The above-mentioned processor 701 may be a general-purpose processor, a Digital Signal Processor (DSP), or another programmable logic device, a discrete gate or a transistor logic device, a discrete hardware component, etc. The processor 701 may implement or execute methods, acts and logical block diagrams disclosed in the embodiments of the present invention. The general purpose processor may be a microprocessor or any conventional processor, or the like. Acts of the methods disclosed in combination with the embodiments of the present invention may be directly embodied as being executed and accomplished by a hardware decoding processor or by a combination of hardware and software modules in a decoding processor. The software module may be located in a storage medium, wherein the storage medium is located in the memory 702, and the processor 701 reads information in the memory 702 and accomplishes the acts of the aforementioned methods in combination with hardware thereof.

In an exemplary embodiment, the electronic device 700 may be implemented by one or more Application Specific Integrated Circuits (ASICs), DSPs, Programmable Logic Devices (PLDs), Complex Programmable Logic Devices (CPLDs), FPGAs, general-purpose processors, controllers, MCUs, MPUs or other electronic components, for performing the aforementioned methods.

An embodiment of the present application further provides a computer readable storage medium, configured to store a computer program.

Optionally, the computer readable storage medium may be applied in a network device of an embodiment of the present application, and the computer program causes a computer to perform the corresponding flows implemented by the network device in various methods of the embodiments of the present application, which will not be repeated here again for brevity.

Optionally, the computer readable storage medium may be applied in a terminal device of an embodiment of the present application, and the computer program causes a computer to perform the corresponding flows implemented by the terminal device in various methods of the embodiments of the present application, which will not be repeated here again for brevity.

The present invention is described with reference to flowcharts and/or block diagrams of methods, devices (systems), and computer program products according to embodiments of the present invention. It should be understood that each flow and/or block in the flowchart and/or the block diagram, and combinations of flows and/or blocks in the flowchart and/or the block diagram may be implemented by computer program instructions. These computer program instructions may be provided to a processor of a general purpose computer, a special purpose computer, an embedded processor or another programmable data processing device to produce a machine, such that instructions which are executed by a processor of a computer or another programmable data processing device produce an apparatus for implementing a function specified in one or more flows in a flowchart and/or one or more blocks in a block diagram.

These computer program instructions may also be stored in a computer-readable memory that can direct a computer or another programmable data processing device to operate in a particular manner, such that instructions stored in the computer-readable memory produce an article of manufacture including an instruction apparatus, wherein the instruction apparatus implements a function specified in one or more flows in the flowchart and/or one or more blocks in the block diagram.

These computer program instructions may also be loaded onto a computer or another programmable data processing device to cause a series of operational acts to be performed on a computer or another programmable device to produce computer-implemented processing, such that instructions which are performed on the computer or the another programmable device provide acts for implementing a function specified in one or more flows in the flowchart and/or one or more blocks in the block diagram.

The above descriptions are only preferred embodiments of the present invention and are not intended to limit the protection scope of the present invention. Any modification, equivalent substitution, improvement, etc. made within the spirit and the principle of the present invention shall all be contained within the protection scope of the present invention.

## Claims

1. A method for signaling processing, comprising:
segmenting, by a terminal device, a signaling into at least two segmented signalings, wherein the segmented signaling is a partial signaling of the signaling; and
sending, by the terminal device, the at least two segmented signalings to a network device.

2. The method of claim 1, wherein segmenting, by the terminal device, the signaling into at least two segmented signalings comprises:
when a size of the signaling is larger than a first threshold, segmenting, by the terminal device, the signaling into at least two segmented signalings;
wherein, a size of each of the at least two segmented signalings is equal, and the size of each segmented signaling is smaller than or equal to the first threshold;
or, a size of a first segmented signaling of the at least two segmented signalings is smaller than the first threshold, and a size of any segmented signaling of the at least two segmented signalings other than the first segmented signaling is equal to the first threshold.

3. The method of claim 1 or 2, wherein before segmenting, by the terminal device, the signaling into at least two segmented signalings, the method further comprises:
receiving, by the terminal device, a request message sent by the network device through a Radio Resource Control (RRC) signaling;
wherein the request message is used for requesting the terminal device to send the signaling to the network device, the request message carries a transaction identity of the RRC signaling.

4. The method of claim 3, wherein the method further comprises:
indicating, by the terminal device, a transaction identity of the segmented signaling corresponding to an RRC signaling.

5. The method of any one of claims 1 to 4, wherein the method further comprises:
indicating, by the terminal device, a position of the segmented signaling in the signaling.

6. The method of claim 5, wherein indicating, by the terminal device, the position of the segmented signaling in the signaling comprises:
indicating, by the terminal device and through a preset identity, that the segmented signaling is a last segmented signaling in the signaling.

7. The method of any one of claims 1 to 6, wherein the method further comprises:
indicating, by the terminal device, a processing relationship between the segmented signaling and a segmented signaling that has already been sent to the network device, wherein the processing relationship is used for processing the segmented signaling by the network device.

8. The method of claim 7, wherein the processing relationship comprises:
the segmented signaling being combined with the segmented signaling that has already been sent to the network device, and the segmented signaling replacing the segmented signaling that has already been sent to the network device.

9. The method of any one of claims 1 to 8, wherein when a second segmented signaling to be sent by the terminal device has same information as a third segmented signaling that has already been sent by the terminal device, the method further comprises:
not sending, by the terminal device, the same information, and indicating that the same information is within the third segmented signaling, and indicating a position corresponding to the same information within the third segmented signaling;
the at least two segmented signalings comprise: the second segmented signaling and the third segmented signaling.

10. The method of any one of claims 1 to 9, wherein the signaling carries capability information of the terminal device.

11. The method of claim 2, wherein the first threshold is a maximum value of transmitted data supported by a Packet Data Convergence Protocol (PDCP) layer.

12. A method for signaling processing, comprising:
receiving, by a network device, at least two segmented signalings sent by a terminal device, wherein the segmented signaling is a partial signaling obtained by segmenting a signaling.

13. The method of claim 12, wherein when a size of the signaling is larger than a first threshold, the signaling is segmented into at least two segmented signalings;
a size of each of the at least two segmented signalings is equal, and the size of each segmented signaling is smaller than or equal to the first threshold;
or, a size of a first segmented signaling of the at least two segmented signalings is smaller than the first threshold, and a size of any segmented signaling of the at least two segmented signalings other than the first segmented signaling is equal to the first threshold.

14. The method of claim 12 or 13, wherein before receiving, by the network device, the at least two segmented signalings sent by the terminal device, the method further comprises:
sending, by the network device, a request message to the terminal device through a Radio Resource Control (RRC) signaling;
wherein the request message is used for requesting the terminal device to send the signaling to the network device, wherein the request message carries a transaction identity of the RRC signaling.

15. The method of claim 14, wherein the method further comprises:
receiving, by the network device, a transaction identity of the segmented signaling corresponding to an RRC signaling.

16. The method of any one of claims 12 to 15, wherein the method further comprises:
receiving, by the network device, an indication of a position of the segmented signaling in the signaling.

17. The method of claim 16, wherein receiving, by the network device, the indication of the position of the segmented signaling in the signaling comprises:
receiving, by the network device, a preset identity sent by the terminal device, wherein the preset identity indicates that the segmented signaling is a last segmented signaling in the signaling.

18. The method of any one of claims 12 to 17, wherein the method further comprises:
receiving, by the network device, an indication of a processing relationship between the segmented signaling and a segmented signaling that has already been stored by the network device, wherein the processing relationship is used for processing the segmented signaling by the network device.

19. The method of claim 18, wherein the processing relationship comprises:
the segmented signaling being combined with the segmented signaling that has already been stored by the network device, and the segmented signaling replacing the segmented signaling that has already been stored by the network device.

20. The method of any one of claims 12 to 19, wherein when a second segmented signaling to be received by the network device has same information as a third segmented signaling that has already been stored by the network device, the method further comprises:
receiving, by the network device, an indication that the same information is within the third segmented signaling and an indication of a position corresponding to the same information within the third segmented signaling;
the at least two segmented signalings comprise: the second segmented signaling and the third segmented signaling.

21. The method of any one of claims 12 to 20, wherein the signaling carries capability information of the terminal device.

22. The method of claim 13, wherein the first threshold is a maximum value of transmitted data supported by a Packet Data Convergence Protocol (PDCP) layer.

23. A terminal device, comprising:
a processing unit, configured to segment a signaling into at least two segmented signalings, wherein the segmented signaling is a partial signaling of the signaling; and
a first sending unit, configured to send the at least two segmented signalings to a network device.

24. The terminal device of claim 23, wherein
the processing unit is configured to segment, by the terminal device, the signaling into at least two segmented signalings when a size of the signaling is larger than a first threshold;
a size of each of the at least two segmented signalings is equal, and the size of each segmented signaling is smaller than or equal to the first threshold;
or, a size of a first segmented signaling of the at least two segmented signalings is smaller than the first threshold, and a size of any segmented signaling of the at least two segmented signalings other than the first segmented signaling is equal to the first threshold.

25. The terminal device of claim 23 or 24, wherein the terminal device further comprises:
a first receiving unit, configured to receive a request message sent by the network device through a Radio Resource Control (RRC) signaling;
wherein the request message is used for requesting the terminal device to send the signaling to the network device, the request message carries a transaction identity of the RRC signaling.

26. The terminal device of claim 25, wherein the processing unit is further configured to indicate a transaction identity of the segmented signaling corresponding to an RRC signaling.

27. The terminal device of any one of claims 23 to 26, wherein the processing unit is further configured to indicate a position of the segmented signaling in the signaling.

28. The terminal device of claim 27, wherein the processing unit is configured to indicate, through a preset identity, that the segmented signaling is a last segmented signaling in the signaling.

29. The terminal device of any one of claims 23 to 28, wherein the processing unit is configured to indicate a processing relationship between the segmented signaling and a segmented signaling that has already been sent to the network device, wherein the processing relationship is used for processing the segmented signaling by the network device.

30. The terminal device of claim 29, wherein the processing relationship comprises:
the segmented signaling being combined with the segmented signaling that has already been sent to the network device, and the segmented signaling replacing the segmented signaling that has already been sent to the network device.

31. The terminal device of any one of claims 23 to 30, wherein when a second segmented signaling to be sent by the terminal device has same information as a third segmented signaling that has already been sent by the terminal device, the processing unit is configured to not send the same information, and indicate that the same information is within the third segmented signaling and indicate a position corresponding to the same information within the third segmented signaling;
the at least two segmented signalings comprise: the second segmented signaling and the third segmented signaling.

32. The terminal device of any one of claims 23 to 31, wherein the signaling carries capability information of the terminal device.

33. The terminal device of claim 24, wherein the first threshold is a maximum value of transmitted data supported by a Packet Data Convergence Protocol (PDCP) layer.

34. A network device, comprising:
a second receiving unit, configured to receive at least two segmented signalings sent by a terminal device, wherein the segmented signaling is a partial signaling obtained by segmenting a signaling.

35. The network device of claim 34, wherein when a size of the signaling is larger than a first threshold, the signaling is segmented into at least two segmented signalings;
a size of each of the at least two segmented signalings is equal, and the size of each segmented signaling is all smaller than or equal to the first threshold;
or, a size of a of a first segmented signaling of the at least two segmented signalings is smaller than the first threshold, and a size of any segmented signaling of the at least two segmented signalings other than the first segmented signaling is equal to the first threshold.

36. The network device of claim 34 or 35, wherein the network device further comprises:
a second sending unit, configured to send a request message to the terminal device through a Radio Resource Control (RRC) signaling;
wherein the request message is used for requesting the terminal device to send the signaling to the network device, wherein the request message carries a transaction identity of the RRC signaling.

37. The network device of claim 36, wherein the second receiving unit is further configured to receive a transaction identity of the segmented signaling corresponding to an RRC signaling.

38. The network device of any one of claims 34 to 37, wherein the second receiving unit is further configured to receive an indication of a position of the segmented signaling in the signaling.

39. The network device of claim 38, wherein the second receiving unit is configured to receive a preset identity sent by the terminal device, wherein the preset identity indicates that the segmented signaling is a last segmented signaling in the signaling.

40. The network device of any one of claims 34 to 39, wherein the second receiving unit is further configured to receive an indication of a processing relationship between the segmented signaling and a segmented signaling that has already been stored by the network device, wherein the processing relationship is used for processing the segmented signaling by the network device.

41. The network device of claim 40, wherein the processing relationship comprises:
the segmented signaling being combined with the segmented signaling that has already been stored by the network device, and the segmented signaling replacing the segmented signaling that has already been stored by the network device.

42. The network device of any one of claims 34 to 41, wherein when a second segmented signaling to be received by the network device has same information as a third segmented signaling that has already been stored by the network device,
the second receiving unit is further configured to receive an indication that the same information is within the third segmented signaling and an indication of a position corresponding to the same information within the third segmented signaling;
the at least two segmented signalings comprise: the second segmented signaling and the third segmented signaling.

43. The network device of any one of claims 34 to 42, wherein the signaling carries capability information of the terminal device.

44. The network device of claim 35, wherein the first threshold is a maximum value of transmitted data supported by a Packet Data Convergence Protocol (PDCP) layer.

45. A terminal device, comprising a processor and a memory configured to store a computer program capable of being run on the processor, wherein
the processor is configured to implement acts of the method for signaling processing of any one of claims 1 to 11 when the computer program is run.

46. A network device, comprising a processor and a memory configured to store a computer program capable of being run on the processor, wherein
the processor is configured to implement acts of the method for signaling processing of any one of claims 12 to 22 when the computer program is run.

47. A storage medium, storing an executable program, wherein, when the executable program is executed by a processor, the method for signaling processing of any one of claims 1 to 11 is implemented.

48. A storage medium, storing an executable program, wherein, when the executable program is executed by a processor, the method for signaling processing of any one of claims 12 to 22 is implemented.
